**Europäisches Patentamt**

**European Patent Office**

**Office européen des brevets**

(11) Numéro de publication : **0 465 456 A1**

# (12) DEMANDE DE BREVET EUROPEEN

(21) Numéro de dépôt : **91870108.7**

(22) Date de dépôt : **05.07.91**

(51) Int. Cl.⁵ : **G07B 15/00,** G07C 9/00, G07F 7/08

(30) Priorité : **06.07.90 BE 9000694**

(43) Date de publication de la demande :
**08.01.92 Bulletin 92/02**

(84) Etats contractants désignés :
**AT BE CH DE DK ES FR GB GR IT LI LU NL SE**

(71) Demandeur : **SOCIETE REGIONALE
WALLONNE DU TRANSPORT
Rue de la Science, 14
B-1040 Bruxelles (BE)**

(72) Inventeur : **Lauryssen, Jean-Michel
Rue de la Belle-Haie, 24
B-1490 Court-Saint-Etienne (BE)**
Inventeur : **Beck, Francis
Rue du Ry Ternel, 14
B-1421 Braine l'Alleud (BE)**

(74) Mandataire : **Plucker, Guy et al
OFFICE KIRKPATRICK SPRL 4 Square de
Meeûs
B-1040 Bruxelles (BE)**

(54) **Système de tarification et de perception proportionnelle dans les transports en commun.**

(57)    L'invention concerne un système destiné à la tarification et à la perception du prix du transport dans les réseaux de transport en commun.

Le dispositif comporte des supports de numéros-codes (11) mis à la disposition des usagers, des détecteurs de proximité (5) et un système informatique (10, 20, 22) de collecte des données à plusieurs échelons.

Ce dlipositif permet une perception rigoureusement en rapport avec la distance parcourue par chaque usager, le lieu de montée et de descente de chaque usager étant comptabilisés quotidiennement par un système informatique central.

EP 0 465 456 A1

FIG 1

L'invention concerne des systèmes destinés à la tarification et la perception du prix du transport dans des réseaux de transport en commun.

Naguère, chaque véhicule de transport en commun était pourvu de deux agents. L'un était chargé de la conduite du véhicule, l'autre de la perception, opération non moins délicate; grâce au contact personnel, le receveur pouvait percevoir un écot proportionnel à la distance parcourue, ou du moins au nombre de sections parcourues.

La perception manuelle, surtout avec un équipage réduit à un seul homme ne convient plus pour des transports vraiment rentables, censés se déplacer rapidement.

Dès l'instant où l'on abandonne la perception manuelle, la tarification zonale s'impose. Ce mode de tarification uniformisé engendre néanmoins un certain nombre de situations anormales. Elle est difficilement applicable en zone urbaine, où la délimitation entre zones est floue, elle est inéquitable par la différence parfois importante d'étendue de ces zones, elle pénalise lourdement certains usagers amenés à franchir la limite de plusieurs zones parfois sur un trajet objectivement fort réduit ou qui habitent un quartier érigé à proximité d'une limite entre zones.

Dans l'état actuel de la technique, c'est l'usager lui-même qui doit évaluer le nombre de zones traversées sur un parcours déterminé et payer le montant correspondant à son estimation. Un tel système de tarification zonale ne permet à la société exploitante que de se faire une idée fort approximative de l'utilisation effective des capacités de son réseau et pénalise l'usager empruntant des "correspondances" entre différentes lignes du réseau.

Le principe des abonnements permet d'établir des pronostics sur le taux d'usage du réseau à certaines heures, mais sans aucune certitude sur la répartition effective des déplacements.

Tous ces problèmes de perception entraînent une inéquité et une fraude croissante, que l'on ne peut limiter que par des contrôles ponctuels, aléatoires et qui accroissent les prestations du personnel.

L'invention a pour but de permettre une solution dynamique et équitable de la perception dans les transports en commun; l'invention a également pour but une connaissance meilleure et plus rapide de l'évolution de l'utilisation d'un réseau de transport en commun, avec pour corollaire une réponse plus rapide et efficace à la demande des usagers.

L'invention a également pour but une réduction du nombre de fraudes dans le domaine des transports publics.

L'invention a également pour but une augmentation de la vitesse commerciale des véhicules, due à la réduction des temps d'arrêt.

L'invention a pour objet un système de tarification automatique dans un réseau de transport en commun, ledit réseau étant formé de véhicules et de zones permettant l'accès à ces véhicules, l'accès de ces véhicules et de ces zones d'accès étant dotés de passages obligés; ce système comporte

– des supports de numéros-codes d'identification, chacun de ces numéros-codes étant attribué nominalement à un usager ou à un groupe d'usagers,

– des détecteurs de proximité placés à chaque passage obligé du réseau, lesdits détecteurs de proximité étant aptes à déchiffrer sans contact direct le numéro-code d'identification de chaque support,

– un moyen d'enregistrement primaire contenu dans une logique de bord, ledit moyen d'enregistrement primaire étant apte à enregistrer chacun des codes d'identification déchiffrés par les détecteurs de promixité auxquels il est raccordé, ainsi que des données permettant de déterminer la ligne, l'heure de l'enregistrement, la valeur affichée au compteur kilométrique lorsque l'enregistrement se fait à bord d'un véhicule,

– des moyens de transmission des données enregistrées par le moyen d'enregistrement primaire vers des centres de collecte de données et de traitement secondaire de l'information, installés à poste fixe,

– des moyens de transmission des données collectées par les centres de collecte de données et de traitement secondaire vers un système central de gestion des données,

– un système central de gestion des données apte à collecter et à traiter les données relevées par les moyens d'enregistrement primaires de chaque véhicule ou zone d'accès du réseau, de façon telle que la distance parcourue sur le réseau par chaque usager puisse être déterminée pour une période donnée, le traitement de ces données comprenant l'application de tarifs modulés suivant la fréquence et les moments d'utilisation du réseau par chaque usager et l'établissement d'un relevé des sommes dues pour chaque usager,

– des moyens de facturation automatique des sommes dues par chaque usager.

De façon avantageuse, les détecteurs de proximité et les logiques de bords sont installées sur des véhicules.

Chaque passage obligé comporte de préférence un détecteur de passage branché sur une alarme concurrement avec le détecteur de proximité correspondant, de façon telle que le déclenchement du détecteur de passage sans lecture concomitante du détecteur de proximité entraîne la mise en circuit de l'alarme.

Suivant une forme d'exécution, le détecteur de passage est constitué par une ou plusieurs marches sensibles. il peut, en outre, comporter au moins une cellule photo-électrique dont le faisceau est disposé en travers des passages obligés.

Suivant une autre forme d'exécution, le détecteur de passage est constitué de deux cellules photo-électriques disposées consécutivement dans chaque passage obligé.

Le moyen d'enregistrement primaire est de préférence doté d'une mémoire, une liste, périodiquement remise à jour, de numéro-codes perdus ou invalidés étant implantée dans ladite mémoire, ledit moyen d'enregistrement primaire étant pourvu de moyens de branchement à un circuit d'alarme, ledit circuit d'alarme étant activé lorsqu'un des numéros-codes relevé par un détecteur de proximité correspond à un des numéros-codes implantés dans la mémoire.

Dans une forme de réalisation avantageuse du système suivant l'invention, les moyens d'enregistrement primaires sont placés dans des véhicules du réseau, des centres de collecte de données et de traitement secondaire de l'information étant implantés à poste fixe en différents points du réseau, lesdits centres de collectes des données et de traitement secondaire étant munis au moins d'un terminal apte à transférer les données stockées par le moyen d'enregistrement primaire des véhicules vers un système central de gestion des données et à transférer de nouvelles données actualisant la liste implantée dans la mémoire de ce moyen d'enregistrement primaire à partir de ce système central de gestion des données.

Les centres de collecte de données et de traitement secondaire sont reliés au système central de gestion des données par exemple par des lignes téléphoniques.

Dans une forme de réalisation préférée, la mémoire des moyens d'enregistrement primaires consiste en un module enfichable apte à être transféré de ce moyen d'enregistrement primaire au centre de collecte des données et de traitement secondaire de l'information.

Dans ces formes de réalisation des indications de service pour un véhicule et son conducteur peuvent être implantées dans la mémoire du moyen d'enregistrement primaire.

Suivant une forme d'exécution possible le transfert de données entre le moyen d'enregistrement primaire d'un véhicule et un terminal s'effectue via une connexion entre ledit véhicule et ledit terminal.

Le moyen d'enregistrement primaire est avantageusement relié à une console disposée à proximité du poste du conducteur, ladite console comportant

– un écran d'affichage et un clavier aptes à permettre des échanges d'informations entre le conducteur et la logique de bord
– une machine débitrice de titres de transport individuels à usage unique
– un détecteur de proximité à portée réduite.

Cette machine débitrice de titres de transport individuels suivant une forme de réalisation est une imprimante.

De façon préférée, le titre de transport individuel à usage unique comporte un film magnétisé apte à être déchiffré par des lecteurs magnétiques intégrés au détecteur de proximité.

Suivant une forme d'exécution avantageuse de l'invention, le moyen d'enregistrement primaire est doté de moyens d'attribution de codes d'identification secondaires, l'émission desdits codes d'identification secondaires étant subordonnée à la présentation au détecteur de proximité à portée réduite d'un support de code d'identification collectif pour le passage de plusieurs usagers; la machine débitrice de titres de transport est apte à débiter des titres de transport individuels à usage unique à ces usagers. Les points de sortie du réseau de chacun des usagers pourvus de ce titre individuel sont enregistrés distinctement par le moyen d'enregistrement primaire, chacun de ces trajets étant imputé au code d'identification collectif, les moyens de facturation automatique facturant la somme de ces trajets à la collectivité attributaire de ce code d'identification collectif.

Le support de numéro-code comporte de préférence un circuit intégré spécifique capable de décoder le faisceau d'un détecteur de proximité et de lui transmettre son code d'identification particulier.

Le titre de transport à usage unique peut, en variante, comporter un code-barre, des lecteurs de code-barre étant associés aux détecteurs de proximité des passages obligés.

Ce titre à usage unique peut également comporter une piste magnétisable apte à être lue par un lecteur approprié.

Pour des raisons évidentes de facilité, on donne au support de numéro-code sensiblement les dimensions d'une carte de banque.

De façon optionnelle, le support de numéro-code a la forme d'un badge.

Suivant une forme avantageuse du système ici décrit, on peut placer des détecteurs de proximité à des passages obligés donnant accès à des services auxiliaires ou associés au réseau. Le système de gestion des données comporte des données relatives à la facturation conjointe à l'usager de ces services auxiliaires ou associés, parmi lesquels on peut citer des parkings, l'accès à des expositions ou d'autres manifestations de tout type, l'accès même à un autre réseau.

L'invention a également pour objet un procédé de tarification et de perception automatique dans un réseau de transport en commun, ledit réseau comportant des véhicules et des zones permettant l'accès à ces véhicules, accessibles par des passages obligés. Ce procédé comporte les opérations suivantes:

– mise à la disposition des usagers de cartes comportant un numéro-code d'identification identifiable à distance, sans contact,
– mise en mémoire dans un système central de gestion du numéro-code attribué à chaque usager,

– lecture du numéro-code de chaque usager pénétrant sur le réseau, cette lecture étant effectuée par des détecteurs de passage, disposés à chaque passage obligé et aptes à identifier sans contact chaque numéro-code,

– enregistrement du numéro-code ainsi identifié dans un moyen d'enregistrement primaire, avec enregistrement simultané de l'heure, du service concerné, de l'affichage du compteur lorsque l'enregistrement se fait à bord d'un véhicule,

– approbation de la lecture,

– vérification, dans une mémoire au contenu périodiquement réinitialisé, de la validité de la carte

– déclenchement d'une alarme si la carte est invalidée ou figure dans la mémoire,

– seconde lecture et enregistrement dans un moyen d'enregistrement primaire du numéro-code de chaque usager avec enregistrement simultané de l'heure, du service, de l'affichage du compteur - lorsque l'enregistrement se fait à bord d'un véhicule - lorsque chaque abonné sort du réseau de transport,

– transfert du contenu de la mémoire de chaque moyen d'enregistrement primaire vers un centre de collecte de données et de traitement secondaire de l'information,

– mise en forme des données ainsi recueillies,

– prélèvement de données relatives à l'exploitation du réseau,

– transmission des données relatives au passage des usagers à un système central de gestion de données,

– mise en mémoire des cartes invalidées déclarées ou relevées, sélection des numéros destinés à figurer dans la mémoire des moyens d'enregistrement primaire, communication de cette sélection aux centres de collecte des données et de traitement secondaire de l'information,

– calcul de la distance effectivement parcourue par chaque usager sur une journée ou sur une période déterminée,

– prise en compte de tarifs dégressifs différenciés suivant la distance parcourue par période, les heures hors-pointe, le statut social de l'usager,

– imputation à chaque usager titulaire d'un numéro-code des trajets effectués sous ce numéro-code.

Un des avantages de l'invention est d'offrir à l'usager régulier une facturation totalement personnalisée, tenant compte de la distance réelle parcourue à bord de transports publics et pouvant comprendre le relevé détaillé de tous ses déplacements sur une période déterminée.

Un autre avantage de l'invention est que la tarification peut être modulée suivant un grand nombre de critères (tarif kilométrique dégressif, tarif heures creuses, situation sociale de l'usager, étudiant, écolier, 3ème âge, handicapé...).

Un autre avantage est que l'usager peut faire domicilier ses factures sur un compte bancaire, d'où il résulte une réduction du risque de non-paiement et la possibilité d'application d'un tarif encore plus favorable.

Le dispositif suivant l'invention est conçu pour coexister avec un dispositif de paiement classique par ticket à usage unique.

Dès que la disparition ou le vol d'une carte d'accès servant de support de numéro-code est signalé, ce numéro-code peut être invalidé auprès du système informatique central et répercuté dans la zone de réapparition présumée, ce qui permet non seulement de limiter les usages abusifs, mais également de localiser les usagers indélicats utilisant indûment ledit support de numéro-code, même après une longue période de latence.

En fonction des données relatives à l'ensemble des déplacements des usagers, il est possible à la société exploitante de mettre en place une dynamique élevée d'adaptation de l'offre et de la demande. La visualisation sur écran d'itinéraires préférentiels - qui peuvent éventuellement passer inaperçus dans une étude classique - peut mettre en exergue la nécessité de nouvelles lignes selon des itinéraires modifiés en harmonie avec les besoins des usagers.

D'autres particularités et avantages de l'invention apparaîtront dans la description faite ci-après d'une forme de réalisation particulière donnée à titre d'exemple et appliquée à une ligne d'autobus, référence étant faite aux dessins annexés, dans lesquels

la Fig. 1 est une vue schématique en élévation d'un véhicule équipé d'une partie du système suivant l'invention

la Fig. 2 est une vue schématique en coupe suivant le plan II-II du véhicule de la Fig. 1

la Fig. 3 est une vue schématique de la logique de bord et de ses équipements périphériques

la Fig. 4 est un schéma des liaisons entre le système informatique central et les centres informatiques des dépôts

la Fig. 5 est une vue schématique par fonctions des différents organes du système de tarification suivant l'invention

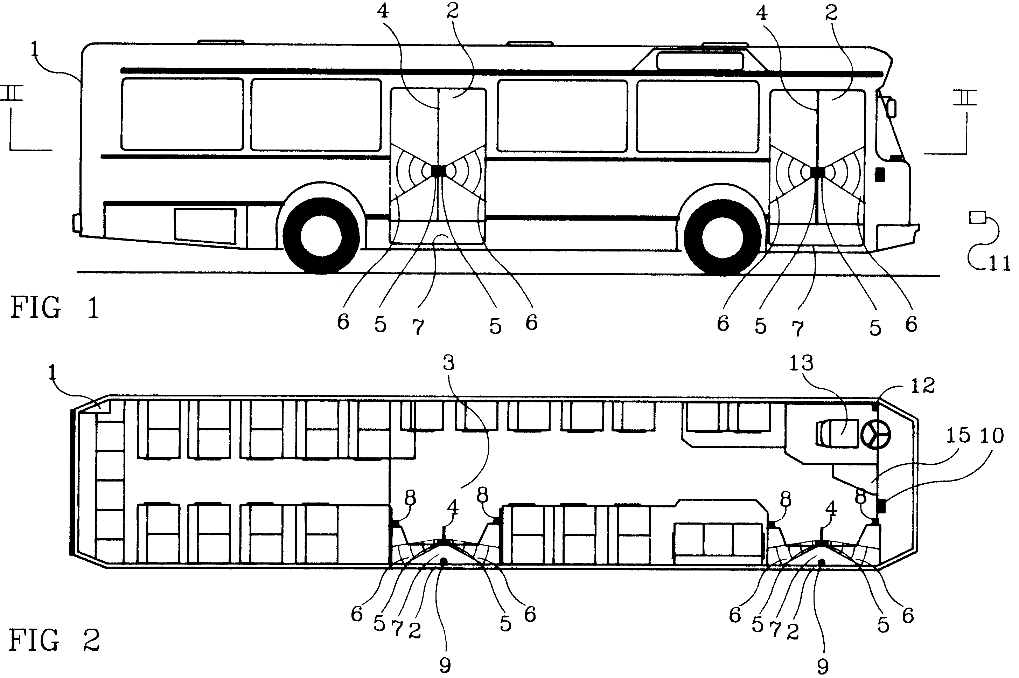

les Figs. 1 et 2 montrent, schématiquement, un véhicule 1 de transport faisant partie d'un réseau de transport en commun équipé d'un dispositif de tarification et de perception automatique du système suivant l'invention.

Les portes d'entrée 2 constituent des passages obligés (pour les usagers), aussi bien à l'entrée qu'à la sortie.

L'accès à la plate-forme 3 est divisé par une barre verticale 4 qui oblige les usagers à défiler un par un à la montée comme à la descente. Cette barre verticale 4 supporte deux détecteurs de proximité 5 dont le faisceau 6 est étroitement délimité de façon à ce que ces détecteurs 5 ne soient pas affectés par la présence d'usagers stationnant sur la plate-forme 3.

Ces détecteurs 5 ne sont de surcroît mis en service que lorsque le véhicule 1 est à l'arrêt, portes ouvertes.

Il va de soi que suivant les caractéristiques des détecteurs de proximité 5 et suivant la forme de leur faisceau 6, on peut placer ces détecteurs plutôt sur les parois de chaque entrée, voire sur les portes elles-mêmes.

Le véhicule 1 comporte en outre des détecteurs de passage, en l'occurrence des marches sensibles 7 et des cellules photoélectriques 8. Une sonnette d'alarme 9 est disposée à hauteur des portes 2, de façon à prévenir de toute tentative d'accès frauduleux. Les détecteurs de passage (7,8) sont couplés au détecteur de proximité 5.

Ces détecteurs 5 sont reliés électriquement à une "logique de bord" 10 qui contient un moyen d'enregistrement primaire et qui est montée à l'avant du véhicule.

Chaque usager est muni d'une carte d'accès 11 (représentée hors échelle) qui constitue le support d'un numéro-code. Ce numéro-code est implanté en l'occurrence dans un circuit intégré spécifique à même de décoder le rayonnement du lecteur et de lui transmettre son code particulier.

Lorsqu'un usager franchit une des portes 2 il passe au-travers du faisceau 6 du détecteur de proximité 5 correspondant. Sa carte 11 provoque, sans qu'il ait à la passer devant le détecteur 5, une perturbation caractéristique dans le champ 6 ce qui permet à ce détecteur 5 de déchiffrer le numéro-code implanté dans la carte 11, sans qu'un contact ait été nécessaire entre ces deux organes.

Le numéro-code ainsi déchiffré est transmis sous forme d'impulsions électriques à la "logique de bord" 10 où il est enregistré dans le moyen d'enregistrement primaire, qui enregistre également l'heure, le numéro de ligne et le kilométrage parcouru par le véhicule 1.

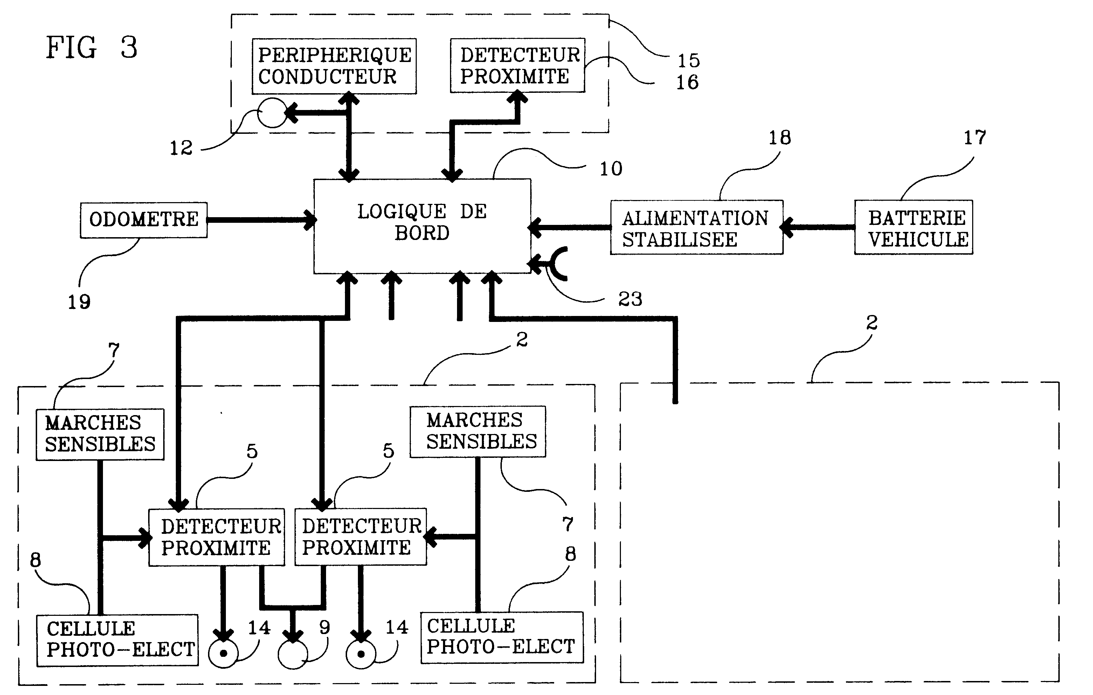

L'agencement des organes de détection et de perception par rapport à la logique de bord 10 est montré à la Fig. 3, qui détaille plus particulièrement l'équipement d'une porte double. Outre les détecteurs de proximité 5, dont la fonction a déjà été détaillée, chaque porte est équipée de détecteurs de passage 7, 8 qui sont branchés de façon à déclencher l'alarme si le détecteur de proximité 5 ne réagit pas simultanément à la lecture d'une carte d'accès 11 par exemple. En l'absence de cette "justification d'accès", les détecteurs de passage 7 et 8 déclenchent la sonnette 9 placée à la hauteur des portes, et une seconde sonnette d'alarme 12 plus discrète, placée dans le poste de conduite 13.

Dans le cas où, comme ici, on place deux détecteurs de passage 7, 8 en cascade à chaque accès, l'ordre dans lequel ils sont activés fournit une indication sur le sens de déplacement (entrée ou sortie) des usagers empruntant le passage obligé.

Pour avertir l'usager que son passage a été dûment enregistré, un signal d'accord 14 doté d'une diode lumineuse et d'un ronfleur est disposé à hauteur de chaque détecteur de proximité 5, confirmant par son émission lumineuse et sonore que le numéro-code de la carte 11 a été dûment lu et identifié par le détecteur de passage.

Il est en effet nécessaire que la logique de bord ait bien enregistré l'entrée et la sortie de chaque passager, car c'est à partir de ces paramètres que sera déduit le kilométrage qu'il aura parcouru et donc, la somme à payer.

Il est en fait pratiquement inévitable qu'un certain nombre de passages donnent lieu à une erreur ou ne soient enregistrés qu'à l'entrée ou à la sortie. Un traitement statistique de ces données incomplètes permet de ne pas intervenir tant que le défaut apparaît de façon réduite et aléatoire. Elle permet de repérer un défaut mécanique ou un mésusage volontaire de la carte.

La Fig. 3 montre également que la logique de bord 10 comporte une extension 15 au poste de conduite 13. La logique de bord 10 est dotée d'une mémoire dans laquelle sont implantées, non seulement une série d'indications de service pour le conducteur, mais encore une liste, régulièrement remise à jour de numéros-codes ayant, par exemple, fait l'objet d'une déclaration de vol, de perte ou d'usage abusif.

Les raisons d'exploitation limitent le volume d'une telle mémoire, notamment en raison du temps lié à l'utilisation des données qui y sont implantées, c'est pourquoi un tri préalable est fait quotidiennement dans les listes qui y sont implantées.

Lorsque la logique de bord 10 constate qu'un numéro-code qu'il vient d'identifier à la montée correspond à un des numéros figurant sur sa "liste noire" elle en alerte le conducteur par son extension 15 au poste de conduite.

La logique de bord 10 fait également remonter le numéro mis en cause en tête de liste, de façon à pouvoir déclencher une alarme instantanée lors d'une seconde lecture de ce même numéro.

Il suffit au conducteur de procéder à un contrôle des cartes des derniers usagers embarqués pour repérer les fraudeurs. Ce contrôle peut se faire grâce à des moyens d'identification portés sur la carte 11 (numéro apparent, nom, photo d'identité) ou par passage de la carte 11 elle-même devant un détecteur de proximité à portée réduite 16.

Dans le cas de groupes, ceux-ci peuvent détenir une carte à usage collectif. Comme il n'est pas obligatoire que chaque membre du groupe effectue le même trajet, le périphérique 15 du conducteur est équipé d'une machine distributrice de tickets.

Chaque membre du groupe reçoit donc un ticket personnel, à un seul usage, daté d'un numéro-code distinct mais associé à la carte à usage collectif. De la sorte, les trajets de chaque membre du groupe, aussi différents soient-ils, seront imputés globalement à la carte collective. Ce ticket à usage unique peut être, doté d'une piste magnétique et peut comporter des indications imprimées directement par une petite imprimante de bord faisant partie de l'extension 15. Ce ticket peut également comporter des indications, telles que des codes-barres pouvant être déchiffrés aisément par un système de lecture approprié monté à chaque porte du véhicule.

Un tel ticket à usage unique peut également être délivré sur une base tarifaire quelconque par le conducteur à un usager totalement dépourvu de titre de transport. Le présent dispositif est donc parfaitement compatible avec d'autres systèmes de tarification.

Le moyen d'enregistrement primaire de la logique de bord 10 enregistre ponctuellement la lieu et l'heure d'un embarquement de ces différents usagers ainsi que leur lieu de débarquement et de sortie du réseau.

La logique de bord 10 est alimentée par la batterie du véhicule 17 via une alimentation stabilisée 18. Elle est également reliée à un odomètre 19 qui lui fournit à tout moment la valeur affichée au compteur du véhicule 1 et ce avec une précision d'environ 100 mètres. Pour compenser une éventuelle "dérive" de ce comptage, les indications de l'odomètre 19 sont régulièrement réinitialisées en tête et en fin de ligne.

En fin de journée, le véhicule 1 est ramené au dépôt et les données glanées tout au long de sa journée de service et stockées dans le moyen d'enregistrement primaire sont transférées de façon à pouvoir être fournies à un système de gestion de données.

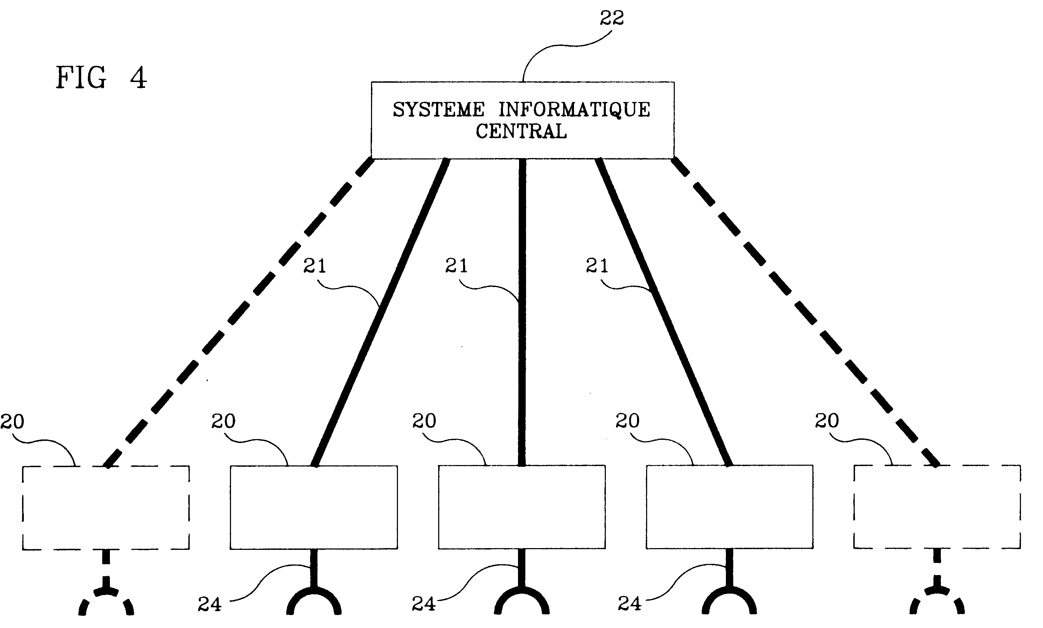

Ce transfert s'effectue normalement en deux stades: de la logique de bord 10 vers un ordinateur de dépôt 20, puis de cet ordinateur de dépôt 20, via une ligne téléphonique 21, vers le système de gestion des données central 22, comme illustré par le diagramme de la Fig. 4.

Le premier transfert de données se fait par une connexion 23 établie entre la logique de bord 10 du véhicule et l'interface 24 de l'ordinateur de dépôt 20. Suivant une autre formule (qui n'est pas illustrée) le support de la mémoire a une forme modulaire. Cet élément modulaire est simplement prélevé dans la logique de bord 10 et transféré sur un support ad hoc relié à l'ordinateur de dépôt 20.

Cet ordinateur de dépôt 20 prélève dans la mémoire les éléments qui l'intéressent (données d'exploitation, données statistiques etc...), prépare les données à recharger dans le véhicule 1 sur base des consignes du système central 22. Il procède aussi à une "mise en forme" des données recueillies et à une synthèse partielle avant de les expédier vers le système central 22. Vers celui-ci convergent les données collectées par chaque véhicule et sur toutes les lignes du réseau.

A partir de l'heure et de la localisation d'entrée et de sortie de chaque numéro-code sur le réseau, on déduit la longueur des trajets effectués par chaque usager.

Le système central de gestion de données 22 met en correspondance les kilomètres parcourus sur une ou plusieurs lignes avec l'identité des usagers, établit les factures, répartit les crédits sur les différents groupes d'exloitation. Il "gère" également le contrôle des cartes 11 volées ou perdues, en remet la liste à jour, structure les listes destinées aux mémoires de bord, contrôle l'adéquation entre l'offre et la demande des usagers, sélectionne au besoin dans son fichier, d'après les lignes empruntées (ou tout autre critère) les usagers susceptibles d'être intéressés par l'une ou l'autre information personnalisée.

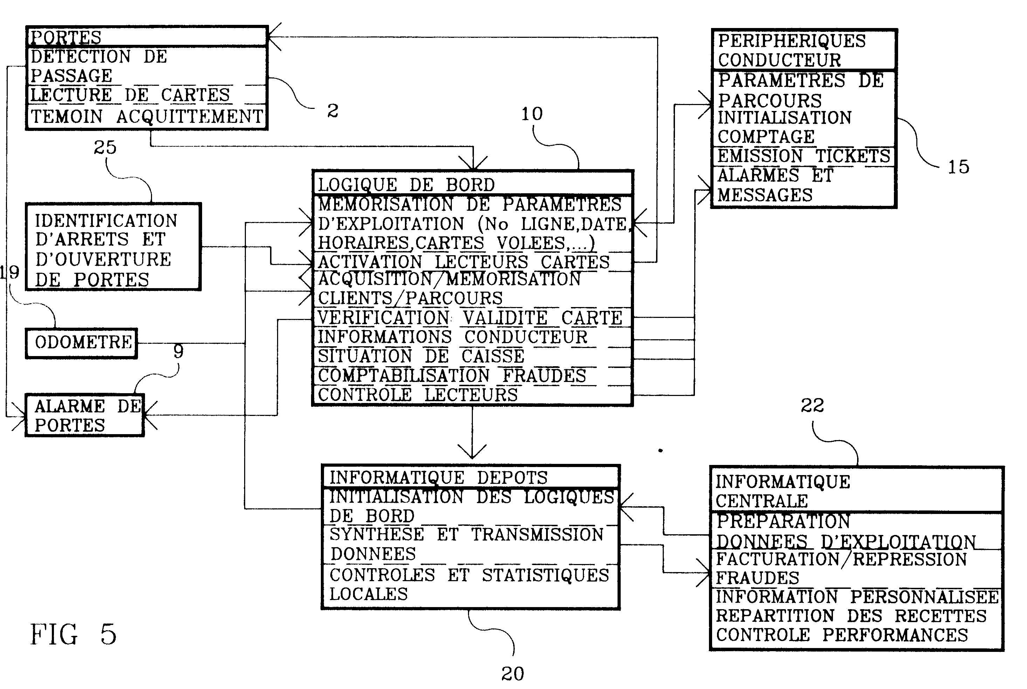

La Fig. 5 reprend, sous forme schématique, les différentes opérations effectuées à chaque unité du dispositif.

L'appareillage des portes 2 procède à la détection de passage des usagers, à la lecture des supports de numéros-codes et des titres de transport à usage unique, vérifie la validité de cette lecture et émet un signal d'acquiescement ou actionne éventuellement la sonnette d'alarme 9 des portes 2.

La logique de bord 10 avec le moyen d'enregistrement primaire qui y est intégré, met d'abord en mémoire les paramètres d'exploitation (numéro de ligne, date, grille horaires, liste de cartes auxquelles il est fait opposition).

Sur indications de dispositifs identificateurs d'arrêt et d'ouverture des portes 25, elle active la mise en service des détecteurs de proximité 5.

En relation avec les détecteurs de passage 7, 8 et avec l'odomètre 19 de bord, elle met en mémoire les points d'entrée et de sortie de chaque usager (avec leur numéro-code). Elle vérifie également, en comparant avec la liste implantée dans sa mémoire, la validité des cartes qui lui ont été soumises et avertit le conducteur du résultat par les appareillages périphériques 15 installés au poste de conduite.

La logique de bord 10 gère également les informations dispensées au conducteur (notamment les alarmes) et lui indique l'état de sa caisse.

La logique de bord 10 contrôle également le bon fonctionnement des détecteurs de passage 7, 8 envoie au conducteur des alarmes ou messages requis par chaque situation anormale. Le conducteur peut, quant à lui, dialoguer avec la logique de bord 10, corriger les paramètres d'exploitation (réinitialisation systématique de l'odomètre 19 en début et en fin de parcours) et émettre des titres de transport à usage unique, qui sont pris en compte dans la mémoire de bord.

La logique de bord 10 est par ailleurs à même d'envoyer au conducteur, via un écran, une série d'alarmes ou de messages correspondant à des situations données.

Les ordinateurs de collecte des données de traitement secondaire de l'information à poste fixe 20 ont comme fonction l'initialisation des données des logiques de bord 10, la synthèse et la transmission des données recueillies en service par chaque véhicule 1 vers le système informatique central 22, enfin ils assurent une série de contrôles et traitent directement les données statistiques relatives à leur dépôt ou part du réseau, celles-ci n'étant pas forcément identiques à celles intéressant l'ordinateur central 22.

Le système informatique central 22 assure la préparation de données d'exploitation pour les jours à venir (données relatives aux cartes 11 volées ou désactivées), et la facturation aux clients (en ménageant une certaine marge statistique dans le cas d'identifications incomplètes). Ce système central 22 gère également son fichier pour l'envoi d'informations personnalisées à certains clients, il répartit les recettes entre les groupes d'exploitation et contrôle leur performances respectives.

On notera que grâce à ce système, on peut offrir à l'usager (en plaçant des détecteurs de passage (5) judicieusement répartis) des services annexes à l'emploi du réseau, tels que l'accès à des parkings, et plus particulièrement à des parkings de dissuasion, l'accès à certaines manifestations culturelles impliquant un déplacement, des actions promotionnelles etc... Tous ces services annexes lui seront imputés à un tarif avantageux via son numéro-code personnel.

## Revendications

1. Système de tarification et de perception automatique dans un réseau de transport en commun, le dit réseau comportant des véhicules et des zones permettant l'accès à ces véhicules, l'accès de ces véhicules et de ces zones d'accès étant dotés de passages obligés caractérisé en ce qu'il comporte:

   – des supports de numéros-codes d'identification, chacun de ces numéros-codes étant attribué nominalement à un usager ou à un groupe d'usagers,

   – des détecteurs de proximité (5) placés à chaque passage obligé du réseau, lesdits détecteurs de proximité (5) étant aptes à déchiffrer sans contact direct le numéro-code d'identification de chaque support,

   – un moyen d'enregistrement primaire contenu dans une logique de bord (10), ledit moyen d'enregistrement primaire étant apte à enregistrer chacun des codes d'identification déchiffré par les détecteurs de proximité (5) auxquels il est raccordé, ainsi que des données permettant de déterminer la ligne, l'heure de l'enregistrement, la valeur affichée au compteur kilométrique lorsque l'enregistrement se fait à bord d'un véhicule,

   – des moyens de transmission (23, 24) des données enregistrées par le moyen d'enregistrement primaire vers des centres de collecte de données et de traitement secondaire de l'information (20), installés à poste fixe,

   – des moyens de transmission (21) des données collectées par les centres de collecte de données et de traitement secondaires (20) vers un système central (22) de gestion des données,

   – un système central de gestion des données (22) apte à collecter et à traiter les données relevées par les moyens d'enregistrements primaires (10) de chaque véhicule ou zone d'accès du réseau, de façon telle que la distance parcourue sur le réseau par chaque usager puisse être déterminée pour une période donnée, le traitement de ces données comprenant l'application de tarifs modulés suivant la fréquence et les moments d'utilisation du réseau par chaque usager et l'établissement d'un relevé des sommes dues pour chaque usager,

   – des moyens de facturation automatique des sommes dues par chaque usager.

2. Système suivant la revendication 1, caractérisé en ce que les détecteurs de proximité (5) et les logiques de bord (10) sont installées sur des véhicules.

3. Système suivant les revendications 1 et 2, caractérisé en ce que chaque passage obligé comporte un détecteur de passage (7, 8) branché sur une alarme (9), concurrement avec le détecteur de proximité (15) correspondant, de façon telle que le déclenchement du détecteur de passage (7,8) sans lecture concomitante du détecteur de proximité (5) entraîne la mise en circuit de l'alarme (9).

4. Système suivant la revendication 3, caractérisé en ce que le détecteur de passage (7, 8) est constitué par une ou plusieurs marches sensibles (7).

5. Système suivant la revendication 4, caractérisé en ce qu'il comporte, outre des marches sensibles, au moins une cellule photo-électrique dont le faisceau est disposé en-travers des passages obligés.

6. Système suivant l'une quelconque des revendications 1, 2 et 3, caractérisé en ce que le détecteur de passage (8) est constitué de deux cellules photo-électriques (8) disposées consécutivement dans chaque passage obligé.

7. Système de tarification suivant l'une quelconque des revendications précédentes, caractérisé en ce que le moyen d'enregistrement primaire (10) est doté d'une mémoire, une liste, périodiquement remise à jour, de numéros-codes perdus ou invalidés étant implantée dans ladite mémoire, ledit moyen d'enregistrement primaire (10) étant pourvu de moyens de branchement à un circuit d'alarme, ledit circuit d'alarme étant activé lorsqu'un des numéros-codes relevé par un détecteur de proximité (5) correspond à un des numéros-codes implantés dans la mémoire.

8. Système suivant la revendication 7, caractérisé en ce que, les moyens d'enregistrement primaires (10) sont placés dans des véhicules du réseau (1), des centres de collecte de données et de traitement secondaire de l'information (20) étant implantés à poste fixe en différents points du réseau, lesdits centres de collecte des données et de traitement secondaire (20) étant munis au moins d'un terminal apte à transférer les données stockées par le moyen d'enregistrement primaire (10) des véhicules (1) vers un système central de gestion des données (22) et à transférer de nouvelles données actualisant la liste implantée dans la mémoire de ce moyen d'enregistrement primaire (10) à partir de ce système central de gestion des données (22).

9. Système suivant la revendication 8, caractérisé en ce que les centres de collecte de données et de traitement secondaire (20) sont reliés au système central de gestion des données (22) par des lignes téléphoniques (21).

10. Système suivant l'une quelconque des revendications précédentes, caractérisé en ce que la mémoire des moyens d'enregistrement primaires (10) forme un module enfichable apte à être transféré de ce moyen d'enregistrement primaire (10) au centre de collecte des données et de traitement secondaire de l'information (20).

11. Système suivant l'une quelconque des revendications 8, 9, 10 caractérisé en ce que des indications de service pour un véhicule (1) et son conducteur sont implantées dans la mémoire du moyen d'enregistrement primaire (10).

12. Système suivant l'une quelconque des revendications 1 à 9, caractérisé en ce que le transfert de données entre le moyen d'enregistrement primaire (10) d'un véhicule (1) et un terminal (24) s'effectue via une connexion entre ledit véhicule (1) et ledit terminal (24).

13. Système suivant l'une quelconque des revendications précédentes, caractérisé en ce que le moyen d'enregistrement primaire (10) est relié à une console (15) disposée à proximité du poste du conducteur (13), ladite console (15) comportant
    – un écran d'affichage et un clavier aptes à permettre des échanges d'informations entre le conducteur et la logique de bord (10)
    – une machine débitrice de titres de transport individuels à usage unique
    – un détecteur de proximité à portée réduite (16)

14. Système suivant la revendication 13, caractérisé en ce que la machine débitrice de titres de transport individuels est une imprimante.

15. Dispositif suivant l'une quelconque des revendications 13 et 14, caractérisé en ce que le titre de transport individuel à usage unique comporte un film magnétisé apte à être déchiffré par des lecteurs magnétiques intégrés aux détecteurs de proximité

16. Système suivant l'une quelconque des revendications 13 à 14, caractérisé en ce que le titre de transport à usage unique comporte un code-barre, des lecteurs de code-barre étant associés aux détecteurs de proximité (5) des passages obligés.

17. Système suivant l'une quelconque des revendications 13 à 16, caractérisé en ce que le moyen d'enregistrement primaire (1) est doté de moyens d'attribution de codes d'identification secondaires, l'émission desdits codes d'identification secondaires étant subordonnée à la présentation au détecteur de proximité à portée réduite (16) d'un support de code d'identification collectif pour le passage de plusieurs usagers, la machine débitrice de titres de transport étant apte à débiter des titres de transport individuels à usage unique à ces usagers, les points de sortie du réseau de chacun des usagers pourvus de ce titre individuel étant enregistrés distinctement par le moyen d'enregistrement primaire (10), chacun de ces trajets étant imputé au code d'identification collectif, les moyens de facturation automatique facturant la somme de ces trajets à la collectivité attributaire de ce code d'identification collectif.

18. Système suivant l'une quelconque des revendications précédentes, caractérisé en ce que le support de numéro-code (11) comporte un circuit intégré spécifique capable de décoder le faisceau (6) d'un détecteur de proximité (5) et de lui transmettre son code d'identification particulier.

**19.** Système suivant l'une quelconque des revendications précédentes, caractérisé en ce que le support (11) a sensiblement les dimensions d'une carte de banque.

**20.** Système suivant l'une quelconque des revendications 1 à 18, caractérisé en ce que le support de numéro-code (11) a la forme d'un badge.

**21.** Système suivant l'une quelconque des revendications précédentes, caractérisé en ce que des détecteurs de proximité (5) sont placés à des passages obligés donnant accès à des services auxiliaires ou associés au réseau, le système central de gestion des données (22) comportant des données relatives à la facturation conjointe à l'usager de ces services auxiliaires ou associés.

**22.** Procédé de tarification et de perception automatique dans un réseau de transport en commun, ledit réseau comportant des véhicules et des zones permettant l'accès à ces véhicules, accessibles par des passages obligés, caractérisé en ce qu'il comporte les opérations suivantes:

– mise à la disposition des usagers de cartes (11) comportant un numéro-code d'identification identifiable à distance, sans contact

– mise en mémoire dans un système central de gestion (22) du numéro-code attribué à chaque usager

– lecture du numéro-code de chaque usager pénétrant sur le réseau, cette lecture étant effectuée par des détecteurs de passage (5) disposés à chaque passage obligé et aptes à identifier sans contact chaque numéro-code

– enregistrement du numéro-code ainsi identifié dans un moyen d'enregistrement primaire (10), avec enregistrement simultané de l'heure, du service concerné, de l'affichage du compteur lorsque l'enregistrement se fait à bord d'un véhicule

– approbation de la lecture

– vérification, dans une mémoire ou contenu périodiquement réinitialisé de la validité de la carte (11)

– déclenchement d'une alarme (9) si la carte (11) est invalidée et figure dans la mémoire

– lecture et enregistrement dans un moyen d'enregistrement primaire (10) du numéro-code de chaque usager avec enregistrement simultané de l'heure, du service, de l'affichage du compteur - lorsque l'enregistrement se fait à bord d'un véhicule - lorsque chaque abonné sort du réseau de transport

– transfert du contenu de la mémoire de chaque moyen d'enregistrement primaire (10) vers un centre de collecte de données et de traitement secondaire de l'information (20)

– mise en forme des données ainsi recueillies

– prélèvement de données relatives à l'exploitation du réseau

– transmission des données relatives au passage des usagers à un système central de gestion de données (22)

– mise en mémoire des numéros-codes invalidés, déclarés ou relevés, sélection des numéros destinés à figurer dans la mémoire des moyens d'enregistrement primaire (10), communication de cette sélection aux centres de collecte des données et de traitement secondaire de l'information (20)

– calcul de la distance effectivement parcourue par chaque usager sur une journée ou sur une période déterminée

– prise en compte de tarifs dégressifs différenciés suivant la distance parcourue par période, les heures hors-pointes, le statut social de l'usager

– imputation à chaque usager titulaire d'un numéro-code des trajets effectués sous ce numéro-code

FIG 1

FIG 2

EP 0 465 456 A1

FIG 3

PERIPHERIQUE CONDUCTEUR

DETECTEUR PROXIMITE

15
16

12

10

ODOMETRE

LOGIQUE DE BORD

ALIMENTATION STABILISEE

18

BATTERIE VEHICULE

17

19

23

2

7

2

MARCHES SENSIBLES

5

5

MARCHES SENSIBLES

7

8

DETECTEUR PROXIMITE

DETECTEUR PROXIMITE

8

CELLULE PHOTO−ELECT

14

9

14

CELLULE PHOTO−ELECT

12

EP 0 465 456 A1

FIG 4

22

SYSTEME INFORMATIQUE CENTRAL

21  21  21

20  20  20  20  20

24  24  24

EP 0 465 456 A1

EP 0 465 456 A1

**PORTES**
DETECTION DE PASSAGE
LECTURE DE CARTES
TEMOIN ACQUITTEMENT

2

25

10

IDENTIFICATION D'ARRETS ET D'OUVERTURE DE PORTES

19

14

ODOMETRE

9

ALARME DE PORTES

**LOGIQUE DE BORD**
MEMORISATION DE PARAMETRES D'EXPLOITATION (No LIGNE, DATE, HORAIRES, CARTES VOLEES,...)
ACTIVATION LECTEURS CARTES
ACQUISITION/MEMORISATION CLIENTS/PARCOURS
VERIFICATION VALIDITE CARTE
INFORMATIONS CONDUCTEUR
SITUATION DE CAISSE
COMPTABILISATION FRAUDES
CONTROLE LECTEURS

**PERIPHERIQUES CONDUCTEUR**
PARAMETRES DE PARCOURS
INITIALISATION COMPTAGE
EMISSION TICKETS
ALARMES ET MESSAGES

15

22

**INFORMATIQUE DEPOTS**
INITIALISATION DES LOGIQUES DE BORD
SYNTHESE ET TRANSMISSION DONNEES
CONTROLES ET STATISTIQUES LOCALES

20

**INFORMATIQUE CENTRALE**
PREPARATION DONNEES D'EXPLOITATION
FACTURATION/REPRESSION FRAUDES
INFORMATION PERSONNALISEE
REPARTITION DES RECETTES
CONTROLE PERFORMANCES

FIG 5

EP 0 465 456 A1

Office européen
des brevets

**RAPPORT DE RECHERCHE EUROPEENNE**

Numéro de la demande

EP   91 87 0108
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0330071 (COMPAGNIE GENERALE D'AUTOMATISME) <br> * colonne 1, ligne 49 - colonne 4, ligne 34; figures * <br> --- | 1-3, 12, 18-22 | G07B15/00 <br> G07C9/00 <br> G07F7/08 |
| A | WO-A-9003016 (REGIE AUTONOME DES TRANSPORTS PARISIENS) <br> * page 2, ligne 11 - page 7, ligne 20; figures * <br> --- | 1, 7, 8, 18-20, 22 | |
| A | INSTITUTE OF ELECTRICAL AND ELECTRONICS ENGINEERS CONF. 10: COMPUTER TECHNOLOGY TO REACH THE PEOPLE, 25-27 février, 1975 <br> NEW YORK <br> pages 259 - 262; KALINOWSKI e.a.: "Microcomputer_application to transit-passenger counting" <br> * page 259, colonne 1, lignes 2 - 31 * <br> * page 260, colonne 1, ligne 20 - colonne 2, ligne 19 * <br> * page 261, colonne 2, ligne 15 - page 262, colonne 1, ligne 46; figures * <br> --- | 1-4, 22 | |
| A | FR-A-2460507 (SOCIETE FRANCAISE D'EQUIPEMENTS POUR LA NAVIGATION AERIENNE) <br> * page 6, ligne 9 - page 8, ligne 18; figures * <br> --- | 1, 2, 5, 6 | **DOMAINES TECHNIQUES RECHERCHES (Int. Cl.5 )** <br><br> G07B <br> G07C |
| A | EP-A-0169278 (COMPUTER SERVICES CORPORATION) <br> * page 2, ligne 26 - page 5, ligne 16 * <br> * page 14, ligne 16 - page 18, ligne 27; figures * <br> --- | 1, 8, 9, 15, 22 | G07F <br> G06M |
| A | EP-A-0063026 (DCA DESIGN CONSULTANTS) <br> * page 4, ligne 13 - page 9, ligne 4; figures * <br> --- | 1, 3, 7, 8, 13, 14, 16, 22 | |
| A | EP-A-0163507 (LONDON UNDERGROUNG) <br> * abrégé; revendications 1-12; figures * <br> --- | 1, 8, 9, 22 | |
| A | FR-A-2491228 (HEULIEZ BUS) <br> * page 5, ligne 7 - page 6, ligne 36; figures * | 1, 10, 11, 22 | |

Le présent rapport a été établi pour toutes les revendications

| Lieu de la recherche | Date d'achèvement de la recherche | Examinateur |
|---|---|---|
| LA HAYE | 03 SEPTEMBRE 1991 | MEYL D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P0402)

15

**Office européen
des brevets**

## RAPPORT DE RECHERCHE EUROPEENNE

Numero de la demande

EP    91 87 0108
Page 2

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5 ) |
| | ----- | | |
| | | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 03 SEPTEMBRE 1991 | MEYL D. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................................
& : membre de la même famille, document correspondant

EPO FORM 1503 03.82 (P0402)

16